# EUROPEAN PATENT SPECIFICATION

(11) **EP 0 410 510 B1**
(45) Date of publication and mention of the grant of the patent: **20.10.1993**
(21) Application number: 90201939.7
(22) Date of filing: 17.07.1990
(51) Int. Cl.: F16D 65/08

(54) **Brake shoe for drum brakes**
Bremsbacke für Trommelbremsen
Mâchoire de frein pour freins à disque

(30) Priority: 28.07.1989 DE 3925081
(43) Date of publication of application: 30.01.1991
(73) Proprietor: Beral Bremsbelag GmbH, D-51709 Marienheide (DE)
(72) Inventor: Jonas, Siegfried, D-5270 Gummersbach (DE)
(74) Representative: Hadfield, Robert Franklin

(56) References cited:
- DE-A- 2 002 436
- GB-A- 284 427
- GB-A- 2 087 995
- US-A- 1 771 594
- US-A- 2 848 073
- US-A- 3 007 549
- PATENT ABSTRACTS OF JAPAN, vol. 7, no. 1 (M-183)[1146], 6th January 1983;& JP-A-57 161 327 (AKEBONO BRAKE KOGYO K.K.) 04-10-1982

## Description

The invention concerns a brake shoe for drum brakes, especially vehicle drum brakes, the curved support surface of the brake shoe being provided with a friction material, the rubbing surface of which comes to lie against the mating surface of the brake drum.

Such a brake is known from for example GB-A-284427 which features a relatively massive brake shoe provided with at least one demountable brake block, the latter being supported by a substantial backing member. This patent is primarily concerned with heat dissipation and ventilation, no provision for bedding-in the brake block being apparently necessary because of the mode of construction of the brake block. However, with modern brake shoe constructions bedding-in is a problem, and this invention is in particular concerned with it.

The rubbing surfaces of a friction lining in the non-bedded-in condition, i.e. with new brake shoes, after relining or after fitting the brake with a new drum do not lie definitely against the mating surface of the drum, so that there are no defined conditions in the fit between the rubbing surface of the brake lining and the mating surface of the drum. As long as conformity between the outside surface of the friction lining and the mating surface of the drum is not achieved, during braking there are frequently considerable deviations between actual braking values and the braking values for which the brake is designed. The conformation process or bedding-in process after which the rubbing surfaces of the friction linings lie completely against the mating surfaces of the drum can, in the case of wear-resistant friction linings, take a very long time, even in the case of friction linings which have been reworked to conformity before being fitted. If, in addition to this, there are different geometries in a vehicle between the two brakes on the right and the left on one axle as a result of poorly or inadequately conformed friction linings, there is inevitably "pulling" to one side during braking.

The object of this invention is the task of creating a brake shoe for drum brakes which makes possible shorter bedding-in periods and thus a more rapid fit of the rubbing surface of the friction lining against the mating surfaces of the brake drums.

Thus according to the invention there is provided a brake shoe for drum brakes, especially vehicle drum brakes, said shoe comprising a curved support surface which is provided with a friction lining, the rubbing surface of which comes to lie against a mating surface of a brake drum, characterised in that the rubbing surface of the friction lining in relation to the circumferential direction is interrupted in a central zone by a free space, the length of which is in the range 30 to 60%, preferably 40 to 50% of the total length of the support surface defined by the end edges of the friction lining.

It has been found that brake shoes designed in this manner are "bedded-in" within the briefest time, i.e. produce the full braking effect. Surprisingly, however, it was also found that despite the fact that the friction lining is not pressed against the mating surfaces of the brake drums over the full length of the support surface, no overstressing of the friction material occurs in the sections of the friction lining situated in each of the end zones of the support surface, although, because of the reduction in the contact area and the theoretically higher surface pressure caused by this, this might have been expected without a change to the brake design. It was also possible to establish that wear on the friction lining is only slightly higher than with a brake shoe lined with friction material over the whole length of the support surface. Surprisingly, it emerged that the wear is nevertheless considerably less than might have been expected with regard to the reduction in the rubbing surface or surfaces coming to lie against the mating surface of the brake drum, so that the brake shoes according to the invention have practically the same durability as normal brake shoes, the support surfaces of which are completely lined with friction material.

Compared with normal brake shoes, moreoever, constant braking values are given during the whole service life, so that here also there is an important improvement.

It has also been shown that, even after a short time, the braking values required for a so-called hot-stop brake application are achieved, i.e. a complete braking of the vehicle with brakes that have run hot. Because of this also an important improvement emerges in comparison with the normal brake shoe design. It has also, surprisingly, been shown that the design of the brake shoes according to the invention is possible also with normal shoe designs and no strength problems of any sort occur on the support part of the brake shoe, although during the braking process, i.e. under load, the friction lining by no means provides support over the full length of the shoe against the mating surface of the brake drum as a result of the free space.

In the brake shoes of this invention, the length of the free space at the centre area of the friction lining is in the range 30 to 60%, preferably 40 to 50%, of the total length of the friction lining. Surprisingly, it has been found that the free space between the two friction surfaces coming to lie against the brake drums can be dimensioned very large in its length without the expected drawbacks of over-proportional wear or even destruction of the friction lining occurring because of an excessive surface pressure during the braking process.

Whilst in principle it is possible to create the free space by a corresponding recess in the friction lining, it is preferred that, in order to form the free space, the friction lining is divided into two part sections, each of which is arranged in an end zone of the support surface. Because of this, there are advantages from a technical manufacturing point of view and also considerable cost advantages. Thus in the relatively short length, measured in the circumferential direction, which is needed for the part sections, an almost flat body emerges for the part sections because of the reduction in the crown height, which is simpler to manufacture and is also simpler to join to the brake shoe. Connection to the brake shoe can be made in the usual way by rivetting or bonding.

It is preferred in this invention, that the part sections of the friction lining are provided, at least at those edges turned away from the free space, with a flatly running out chamfer. By means of such a flat chamfer, bedding-in is improved and the bedding-in time is reduced, since the friction lining, even after little driving time, supports fully against the mating surface of the brake drum during the braking process. The flatly running out chamfers may, if desired, also be provided on the edges of the part sections of the friction lining which are turned towards the free space. The length of the chamfer, measured in the circumferential direction, may be about 1/6th to 1/3rd the length of the sections of friction linings.

In a further advantageous embodiment of the invention, the support surface of the brake shoe is provided with stops, in each case for the support at least of the outside end edges of the friction lining part sections. These stops can be formed by webs set up on the support surface, but preferably, the support surface is provided with appropriate pocket-shaped indentations to receive the part sections of friction material. By provision of such stops, in the first place the fitting of the friction lining part sections is facilitated, since precise fixing of the part sections on the support surface made easier. In the second place, additional support for the friction lining part sections is given in the circumferential direction during the braking process, so that, despite the reduction in the effective rubbing surface of the friction lining for the braking process and the reduction caused by this in the adhesion area between the friction lining part section and the support surface of the brake shoe, satisfactory take-up of the brake torque is achieved, which is of importance both for attachment by means of bonding as well as for attachment by means of rivets, and the friction lining part sections are held firmly in place.

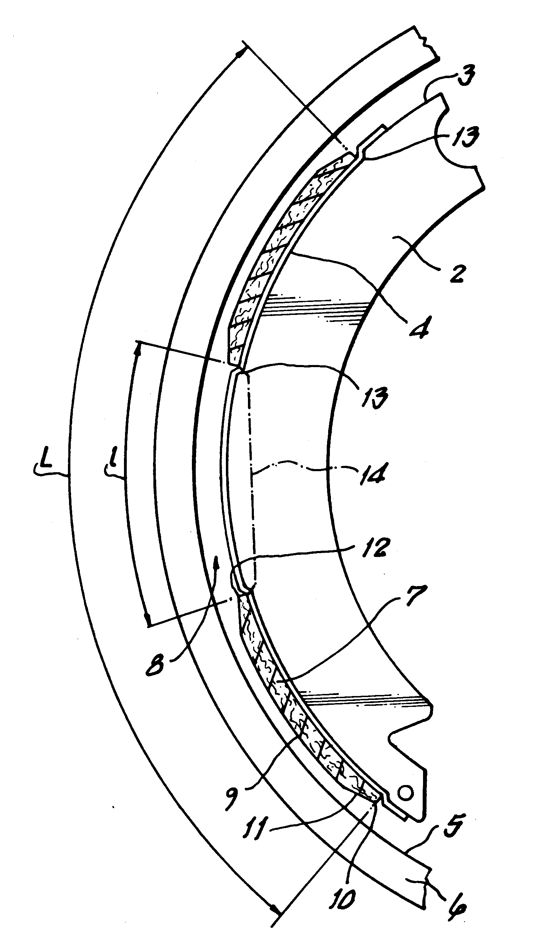

The invention will now be explained in more detail with reference to the accompanying drawing which is a diagrammatic side view of one practical example of a brake shoe for a drum brake.

As shown in the drawing a brake shoe 1 consists essentially of a curved support web 2, which is provided with a support surface 4 on its outside edge 3, so that the brake shoe 1 has a more or less T-shaped section. The support surface 4 is lined with friction lining part sections 7 on its surface turned towards the mating surface 5 of the brake drum 6. The friction lining part sections 7 in each case are attached in the end zone of the support surface 4, so that a free space 8 remains between them, by which the rubbing surface 9 of the friction lining part sections 7 which acts during the braking process is interrupted. In the practical example illustrated, the length 1 of the free space 8, measured in the circumferential direction, is about 30% of the total length L of the support surface defined by the end edges 10 of the friction lining 7.

The friction lining part sections 7 are provided with a flatly running out chamfer 11 on those edges 10 which are turned away from the free space 8. The length of each such chamfer is about 1/6th the total length of the particular friction lining part section.

In the practical example illustrated, those end edges 12 of the friction lining part sections 7 which are turned towards the free space 8 are also provided with a flatly running out chamfer, the length of which can correspond to the length of the chamfer on the edge 10 turned away from the free space. The length of the chamfer on the edge 12 turned towards the free space can, however, also be selected to be greater and, according to the lining quality and the brake design, can be up to one third the length of the friction lining part section.

Because of the chamfer turned towards the free space, it is possible to keep the free space between rubbing surfaces of the lining part sections in the new condition initially very great, so that the conformity of the rubbing surface 9 to the mating surface 5 of the brake drum 6 takes place after a short time and the full brake performance of the brake is achieved. With increasing wear, the rubbing surface 9 of the friction lining which comes to lie against the mating surface 5 of the brake drum becomes larger, so that an increasingly larger volume for wear is available. Towards the end of the service life of the brake shoe, the friction lining part sections 7 lie against it in their full length during the braking process.

Despite the substantial reduction in the rubbing area of the friction lining which acts during the braking process because of the free space 8 and the chamfers in relation to the total area of the support surface 4, in the case of the brake design according to the invention, there is an almost negligible reduction in the service life compared with a normal brake shoe, in which the support surface 4 would be lined with friction material over the full circumferential length. There is also a substantial increase in safety, since, with the brake shoe according to the invention, even after a quite short bedding-in period, the full braking performance is available. It is thus possible, for example, to carry out a hot-stop brake application during a valley descent with hot brakes with a new brake shoe which has not been bedded in, which gives braking values which are otherwise only possible with bedded-in brakes.

The brake shoe 1, in the practical example illustrated, is provided with stops 13 for the end edges of the friction lining part sections, which are formed by providing two pocket-shaped indentations in the support surface 4 each to receive a lining part section. With this kind of a design the friction lining part sections can be bonded on in a simple manner, as the pocket-shaped indentation in the support surface 4 with its supports 13 offers provides a ready means for accurately positioning the lining part sections 7 during bonding.

Because of the geometry between the mating surface 5 of the brake drum 6 and the brake shoe 1, in the practical example illustrated, with almost worn-down friction linings, the support surface 4 is liable to come to lie against the mating surface 5 in the zone of the free space 8. In an alternative embodiment, to avoid this possibility, it is therefore arranged that this zone of the support surface 5 between the two friction lining part sections 7 is at least with a greater radius of curvature, preferably planar. This zone can also be offset somewhat radially inwardly. A possible course of the support surface in this zone is indicated by the dot-dash line 14. The stops 13 are then left out in this zone situated in the free space, as the outside stops 13 are adequate for the purpose of fitting and so the friction lining sections can be almost completely worn down, without potential of contact between the support surface and the mating surface.

## Claims

1. A brake shoe for drum brakes, especially vehicle drum brakes, said shoe (1) comprising a curved support surface (4) which is provided with a friction lining (7), the rubbing surface (9) of which comes to lie against a mating surface of a brake drum, the rubbing surface (9) of the friction lining (7) is interrupted by a free space (8), characterised in that the free space is in a central zone in relation to the circumferential direction, the length (l) of which is 30 to 60%, preferably 50% of the total length (L) of the support surface (4) defined by the end edges (10) of the friction lining.

2. A brake shoe according to Claim 1 characterised in that, for the formation of the free space (8), the friction lining is divided into two part sections (7) arranged in the respective end zones of the support surface (4).

3. A brake shoe according to Claim 1 or 2, characterised in that the friction lining is provided, at least at its edges (10) turned away from the free space (8), with a flatly running out chamfer (11).

4. A brake shoe according to Claim 3, characterised in that the length of the chamfer (11, 12), measured in the circumferential direction, is about 1/6th to 1/3rd the length of the particular friction lining part section (7) on which it is located.

5. A brake shoe according to any one of Claims 1 to 4, characterised in that the support surface (4) is provided with stops (13) for the support at least of the outer end edges of the friction lining part sections (7).

6. A brake shoe according to any one of Claims 1 to 5, characterised in that the support surface (4) is designed at least with a greater radius of curvature, preferably planar, in the zone of the free space (8).

## Patentansprüche

1. Bremsbacke für Trommelbremsen, insbesondere Fahrzeugtrommelbremsen, wobei die Backe (1) eine gekrümmte Lagerfläche (4) aufweist, die mit einem Reibbelag (7) versehen ist, dessen Reib- bzw. Schleiffläche (9) gegen eine passende Fläche einer Bremstrommel zur Anlage kommt, wobei die Reibfläche (9) des Reibbelages (7) durch einen freien Raum (8) unterbrochen ist, dadurch gekennzeichnet, daß der freie Raum in einer zentralen Zone bezüglich der Umfangsrichtung ist, wobei die Länge (1) hiervon 30 bis 60 %, vorzugsweise 50 % der Gesamtlänge (L) der Lagerfläche (4) beträgt, die durch die Endkanten (10) des Reibbelages definiert ist.

2. Bremsbacke nach Anspruch 1, dadurch gekennzeichnet, daß der Reibbelag zur Ausbildung des freien Raumes (8) in zwei Teilabschnitte (7) unterteilt ist, die in den jeweiligen Endzonen der Lagerfläche (4) angeordnet sind.

3. Bremsbacke nach Anspruch 1 oder 2, dadurch gekennzeichnet, daß der Bremsbelag zumindest an seinen Kanten (10), die von dem freien Raum (8) abgewandt sind, mit einer flach auslaufenden Abschrägung (11) versehen ist.

4. Bremsbacke nach Anspruch 3, dadurch gekennzeichnet, daß die Länge der Abschrägung (11, 12), gemessen in Umfangsrichtung etwa 1/6 bis 1/3 der Länge des bestimmten Reibbelagteilabschnittes (7) beträgt, auf dem sie angeordnet ist.

5. Bremsbacke nach einem der Ansprüche 1 bis 4, dadurch gekennzeichnet, daß die Lagerfläche (4) mit Anschlägen (13) für die Lagerung von zumindest den äußeren Endkanten der Reibbelagteilabschnitte (7) versehen ist.

6. Bremsbacke nach einem der Ansprüche 1 bis 5, dadurch gekennzeichnet, daß die Lagerfläche (4) in der Zone des freien Raumes (8) zumindest mit einem größeren Krümmungsradius und vorzusgweise eben gestaltet ist.

## Revendications

1. Mâchoire de frein pour des freins à disque, en particulier des freins à disque de véhicule, ladite mâchoire (1) comprenant une surface de support courbe (4) qui est dotée d'une garniture d'adhérence (7), dont la surface de frottement (9) vient se placer contre une surface de jointement d'un tambour de frein, la surface de frottement (9) de la garniture d'adhérence (7) étant interrompue par un espace libre (8), caractérisée en ce que l'espace libre se situe dans une zone centrale relativement à la direction circonférentielle, la longueur (l) de l'espace libre étant comprise entre 30% et 60%, étant de préférence égale à 50% de la longueur totale (L) de la surface de support (4) définie par les bords d'extrémité (10) de la garniture d'adhérence.

2. Mâchoire de frein selon la revendication 1, caractérisée en ce que, pour la formation de l'espace libre (8), la garniture d'adhérence est divisée en deux parties (7) disposées dans les zones d'extrémité respectives de la surface de support (4).

3. Mâchoire de frein selon la revendication 1 ou 2, caractérisée en ce que la garniture d'adhérence est dotée, au moins à ses bords (10) orientés loin de l'espace libre (8), d'un chanfrein (11) s'étendant à plat vers l'extérieur.

4. Mâchoire de frein selon la revendication 3, caractérisée en ce que la longueur du chanfrein (11, 12), mesurée dans la direction circonférentielle, est d'environ 1/6ème à 1/3 de la longueur de la partie (7) spécifique de la garniture d'adhérence sur laquelle elle est située.

5. Mâchoire de frein selon l'une quelconque des revendications 1 à 4, caractérisée en ce que la surface de support (4) est dotée d'arrêts (13) pour le support au moins des bords d'extrémité externes des parties (7) de la garniture d'adhérence.

6. Mâchoire de frein selon l'une quelconque des revendications 1 à 5, caractérisée en ce que la surface de support (4) est dotée au moins d'un plus grand rayon de courbure, de préférence plan, dans la zone de l'espace libre (8).
